# EUROPÄISCHE PATENTANMELDUNG

(11) **EP 1 530 338 A1**
(43) Veröffentlichungstag der Anmeldung: **11.05.2005**
(21) Anmeldenummer: 03025540.0
(22) Anmeldetag: 07.11.2003
(51) Int. Cl.: H04L 29/06, H04M 11/06

(54) **Einrichtung zur Herstellung einer Kommunikationsverbindung**

(71) Anmelder: AlphaShield Europe GmbH, 41236 Mönchengladbach (DE)
(72) Erfinder: Steinhauser, Bruno, 41199 Mönchengladbach (DE)
(74) Vertreter: Stenger, Watzke & Ring Patentanwälte

(57) **Zusammenfassung**

Die vorliegende Erfindung betrifft eine Einrichtung zur Herstellung einer Kommunikationsverbindung zwischen einer Datenverarbeitungs- und/oder Speichereinrichtung und einem Datennetzwerk mit Schnittstellen zum Anschluß an die Datenverarbeitungs- und/oder Speichereinrichtung und an das Datennetzwerk und mit einer Modemeinheit.

Der vorliegenden Erfindung liegt die Aufgabe zugrunde, eine gattungsgemäße Einrichtung derart weiterzubilden, daß ohne zusätzlichen Verkabelungsaufwand kostengünstig die oben genannten Nachteile überwunden werden können.

Als Lösung wird mit der Erfindung vorgeschlagen, daß die Einrichtung eine schaltungstechnisch zwischen der Modemeinheit und der Schnittstelle zum Anschluß an die Datenverarbeitungs- und/oder Speichereinrichtung vorgesehene Schalteinheit aufweist, mittels der die Kommunikationsverbindung zwischen der Verarbeitungs- und/oder Speichereinrichtung und der Modemeinheit schaltbar ist.

## Beschreibung

Die vorliegende Erfindung betrifft eine Einrichtung zur Herstellung einer Kommunikationsverbindung zwischen einer Datenverarbeitungs- und/oder Speichereinrichtung und einem Datennetzwerk mit Schnittstellen zum Anschluß an die Datenverarbeitungs- und/oder Speichereinrichtung und an das Datennetzwerk und mit einer Modemeinheit. Darüber hinaus betrifft die Erfindung ein Verfahren zum Betrieb der erfindungsgemäßen Vorrichtung.

Der Sicherheit von Computernetzwerken, insbesondere des Internets, wird zunehmend eine höhere Aufmerksamkeit gewidmet, da die wirtschaftliche Bedeutung des Informationsaustausches über solche Datennetze enorm gewachsen ist. Die Vernetzung erlaubt den Zugriff auf alle für das Netzwerk freigegebenen Daten. Oftmals sind auf einzelnen Datenverarbeitungs- und/oder Speichereinrichtungen Daten abgelegt, die vor einem öffentlichen und/oder unberechtigten Zugriff geschützt sein sollen. Durch sogenanntes "Hacken" versuchen unberechtigte Dritte solche Daten ausfindig und für sie nützbar zu machen. Darüber hinaus gibt es Versuche von Dritten, unberechtigt Zugriff auf Datenverarbeitungs- und/oder Speichereinrichtungen zu erlangen, um beispielsweise die Benutzung der Einrichtung zu behindern und/oder dort gespeicherte Daten zu verändern oder zu zerstören.

In der Regel weisen daher die meisten Datenverarbeitungs- und/oder Speichereinrichtungen eine durch Software gebildete Sicherheitseinrichtung auf. Am bekanntesten sind hierbei Anti-Virus-Software und Firewall-Software. Die Anti-Virus-Software ist dafür vorgesehen, vor sogenannten Virus-Programmen zu schützen und solche aus dem Speicherbereich zu entfernen. Insbesondere sollen Virus-Programme entfernt werden, die durch Email und Internet-Verbindungen übermittelt werden. Eine Firewall-Software wirkt dagegen durch Verhinderung eines Zugriffs auf den Computer oder das Computernetzwerk vom Internet aus, wenn keine vorgegebenen Sicherheitsanforderungen erfüllt werden, die durch den Benutzer festgelegt werden.

Bisher ist es üblich, daß ein Nutzer sich mittels seines PC's über ein Modem und eine Telefonleitung in das Internet zuschaltet. Dazu wird auf Anforderung mittels des PC's von einem mit dem PC in Kommunikationsverbindung stehenden Modem eine Zugangsnummer gewählt, die eine Verbindung zu einem Internet-Service-Provider (ISP) herstellt. Sobald der Nutzer seine Internet-Sitzung beendet, wird wiederum mittels des PC's die Telefonverbindung über das Modem abgeschaltet oder der ISP erzeugt ein "Time-out"-Signal, durch welches das Modem vom ISP getrennt wird. Die Telefonverbindung wird unterbrochen, und es ist für Dritte unmöglich, auf den PC des Nutzers zu zugreifen.

Mit zunehmendem Einsatz von Hochgeschwindigkeits-Dauer-Internetverbindungen setzt sich der Nutzer der Gefahr aus, daß Dritte unberechtigt Zugriff auf seinen PC erhalten.

Zur Verhinderung derart unberechtigter Zugriffe wird oftmals eine sogenannte Firewall kommunikationstechnisch zwischen dem Modem und dem Rechner bzw. einem lokalen Netzwerk vorgesehen. Die Firewall kann beispielsweise aus Software bestehen, sie kann aber auch Hardware-Komponenten mit umfassen. Der insgesamt hohe Aufwand führt jedoch nicht zu einer entsprechend hohen Sicherheit, so daß hier Bedarf an einer Verbesserung besteht.

Als einen Lösungsansatz zur Verbesserung der Sicherheitssituation offenbart die WO 01/95069 eine Schaltvorrichtung, die kommunikationstechnisch zwischen dem PC und dem Modem angeordnet ist, und die durch manuelle Betätigung in einen Zustand der Ermöglichung einer Kommunikationsverbindung oder der Verhinderung einer Kommunikationsverbindung geschaltet werden kann. Darüber hinaus kann durch Vorsehung eines Timers eine bestehende Kommunikationsverbindung bei Ablauf der vorgegebenen Zeit unterbrochen werden.

Nachteilig an dieser Ausgestaltung ist, daß ein hoher hardwaremäßiger Aufwand, insbesondere Verkabelungsaufwand, erforderlich ist und im praktischen Betrieb, insbesondere in Bürogebäuden, eine derartige Vorrichtung störanfällig ist.

Es ist daher die **Aufgabe** der vorliegenden Erfindung eine gattungsgemäße Einrichtung derart weiterzubilden, daß ohne zusätzlichen Verkabelungsaufwand kostengünstig die oben genannten Nachteile überwunden werden können.

Als **Lösung** wird mit der Erfindung vorgeschlagen, daß die Einrichtung eine schaltungstechnisch zwischen der Modemeinheit und der Schnittstelle zum Anschluß an die Datenverarbeitungs- und/oder Speichereinrichtung vorgesehene Schalteinheit aufweist, mittels der die Kommunikationsverbindung zwischen der Verarbeitungs- und/oder Speichereinrichtung und der Modemeinheit schaltbar ist.

Mit der Erfindung wird erstmals eine Einrichtung zur Verfügung gestellt, die neben der bekannten Modemfunktion auch eine äußerst wirksame Schutzfunktion gegen einen unberechtigten Zugriff aus dem Datennetzwerk heraus bereitstellt und die darüber hinaus aufgrund ihrer Hardwareausführung auch von unberechtigten Zugriffen Dritter nicht beschädigt oder außer Kraft gesetzt werden kann. So können unerwünschte bzw. unberechtigte Zugriffe von Dritten über das Datennetzwerk auf die Datenverarbeitungs- und/oder Speichereinrichtung verhindert werden. Insbesondere kann erreicht werden, daß ein sogenanntes "Hacken" erheblich erschwert wird, da die Einrichtung selbst keine IP-Adresse aufweist. Die Datenverarbeitungs- und/oder Speichereinrichtung kann beispielsweise ein einzelner lokaler PC sein, sie kann aber auch durch ein lokales Netzwerk, Intranet, gebildet sein an dem mehrere PC's lokal miteinander in Kommunikationsverbindung stehen. Darüber hinaus kann die Datenverarbeitungsund/oder Speichereinrichtung auch durch separate Speichermedien, Server oder dergleichen gebildet sein. Zum Anschluß weist die Einrichtung zwei Schnittstellen auf, die gemäß einem Standardformat wie Ethernet, RS 232, IEEE oder dergleichen ausgebildet sein können. Zur mechanischen Ausführung der Schnittstelle kann eine bekannte genormte Steckverbindung zum Einsatz kommen, wie z. B. RJ 45 oder dergleichen. Das Datennetzwerk kann zum einen durch eine weitere Datenverarbeitungs- und/oder Speichereinrichtung wie einem PC gebildet sein oder sie kann auch ein Netzwerk sein, wie z. B. das Internet. Der Anschluß kann mit für die Schnittstelle geeigneten Kabeln erfolgen. Es kann sich hierbei um paarweise verdrillte Leitungen sowie auch um koaxiale Leitungen handeln. Die Modemeinheit kann als bekannte Modemeinheit ausgebildet sein, die z. B. geeignet ist, eine Einwahlverbindung über eine Telefonleitung zu einem Providerserver (ISP) herzustellen, um so einen Zugang von einem PC ins Internet zu schaffen. Das Modem kann beispielsweise als Standardmodem mit Übertragungsgeschwindigkeiten von 9,6 kB bis 56 kB für Standardtelefonleitungen oder auch als ISDN-Modem für eine ISDN-Telefonleitung ausgebildet sein. Vorzugsweise ist das Modem jedoch ein DSL-Modem zur Bereitstellung einer hohen Datenübertragungsrate. Es kann vorgesehen sein, daß die Modemeinheit permanent mit dem Providerserver in Kommunikationsverbindung steht, d. h., daß eine Standleitung bereitgestellt ist. Erfindungsgemäß ist die Schalteinheit innerhalb der Einrichtung zwischen der Schnittstelle zur Datenverarbeitungs- und/oder Speichereinrichtung und der Modemeinheit schaltungstechnisch angeordnet, um auf Signale vom Datennetzwerk reagieren zu können, da diese datennetzwerkseitig erst durch das Modem zurücktransformiert werden müssen. Mit der Schalteinheit kann die Kommunikationsverbindung zwischen der Modemeinheit und der Datenverarbeitungs- und/oder Speichereinrichtung bedarfsweise unterbrochen werden. So kann beispielsweise gewährleistet werden, daß die Kommunikationsverbindung beispielsweise nur dann hergestellt werden kann, wenn von der Datenverarbeitungs- und/oder Speichereinrichtung eine entsprechende Kommunikationsverbindung zum Datennetzwerk gewünscht wird. So kann verhindert werden, daß durch beliebig langes "Hacken" unberechtigten Dritten ein Zugriff auf die Datenverarbeitungs- und/oder Speichereinrichtung erschwert wird. Verkabelsaufwand kann reduziert und die Zuverlässigkeit kann erhöht werden.

In einer Ausgestaltung wird vorgeschlagen, daß die Einrichtung eine Steuereinheit aufweist, mittels der die Schalteinheit steuerbar ist. Die Steuereinheit kann eine elektronische Steuereinheit sein, sie kann aber auch einfach als manuelle Taste oder auch Schalter ausgebildet sein. Die Steuereinheit wirkt auf die Schalteinheit derart, daß die Kommunikationsverbindung durch die Schalteinheit auf Anforderung durch die Steuereinheit unterbrochen und/oder hergestellt wird. Es kann auch eine Kombination mehrerer Steuereinheiten vorgesehen sein, so beispielsweise eine Taste zusätzlich mit einer elektronischen Steuereinheit. Die Steuerung kann beispielsweise so ausgelegt sein, daß die Schalteinheit auf Anforderung durch eine manuelle Betätigung der Taste eine Kombinationsverbindung herstellt oder unterbricht, wobei zusätzlich eine elektronische Steuereinheit in Abhängigkeit von vorgebbaren Parametern die Schalteinheit veranlaßt, eine bestehende Kommunikationsverbindung wieder zu unterbrechen. So können durch Kombinationen von unterschiedlichen Steuereinheiten und Parametern eine Vielzahl von gewünschten Funktionsabläufen der Schalteinheit erreicht werden, wodurch eine bedarfsgerechte Anpassung an das Schutzbedürfnis unter Berücksichtigung der Nutzungsanforderungen erreicht werden kann.

Es wird ferner vorgeschlagen, daß die Schalteinheit automatisch ab- und/oder einschaltbar ist. So kann beispielsweise vorgesehen sein, daß die Datenverarbeitungs- und/oder Speichereinrichtung die Schalteinheit automatisch ab- und/oder einschaltet. Es kann ferner vorgesehen sein, daß die Schalteinheit nur dann eingeschaltet ist, wenn die Datenverarbeitungs- und/oder Speichereinrichtung eine entsprechende Kommunikationsverbindung zum Datennetzwerk benötigt. Nach Übertragung der angeforderten Daten aus dem Datennetzwerk kann vorgesehen sein, daß die Schalteinheit entweder durch eine Steuereinheit oder auch durch die Datenverarbeitungs- und/oder Speichereinrichtung selbst abgeschaltet wird.

In einer weiteren Ausgestaltung wird vorgeschlagen, daß die Schalteinheit einen Port aufweist. So kann beispielsweise vorgesehen sein, daß eine Kommunikationsverbindung, welche mehrere Kanäle aufweist, die jeweils über einen Port der Schalteinheit geführt sind, unabhängig voneinander ab- und/oder einschaltbar sind. Dies ist beispielsweise dann von Vorteil, wenn parallel mehrere Kommunikationsverbindungen zum Datennetzwerk aufgebaut sind, um mit unterschiedlichen Datenquellen oder Datensenken zu kommunizieren.

In einer weiteren Ausgestaltung der vorliegenden Erfindung wird vorgeschlagen, daß die Einrichtung eine Recheneinheit aufweist. Mittels der Recheneinheit kann erreicht werden, daß die Schalteinheit abhängig von weiteren Betriebsbedingungen, wie beispielsweise von der Steuereinheit, reagieren kann. Es kann erreicht werden, daß in Abhängigkeit von Betriebszuständen der Einrichtung und/oder vorgebbaren Parametern und/oder Befehlen der Datenverarbeitungs- und/oder Speichereinrichtung einzelne Ports der Schalteinheit unabhängig voneinander geschaltet werden können. Auch kann die Recheneinheit überwachen, ob durch eine unberechtigte Anfrage über das Datennetzwerk der Aufbau einer Kommunikationsverbindung zur Datenverarbeitungs- und/oder Speichereinrichtung ohne von dieser angefordert zu sein, aufgebaut wird. Der Schutz vor einem unberechtigten Zugriff auf Daten der Datenverarbeitungsund/oder Speichereinrichtung kann weiter erhöht werden.

Weiterhin wird vorgeschlagen, daß die Recheneinheit als Mikro-Chip-Prozessor ausgebildet ist. So kann eine hohe Packungsdichte bei geringen Kosten erreicht werden. Besonders vorteilhaft kann als Mikro-Chip-Prozessor ein handelsüblicher Prozessor verwendet werden, wie er beispielsweise in vielen Haushaltsgeräten oder auch Peripheriegeräten für Datenverarbeitungsanlagen verwendet wird.

In einer vorteilhaften Weiterbildung wird vorgeschlagen, daß die Recheneinheit eine Programmeinheit mit Festspeicher aufweist. So kann erreicht werden, daß auch komplexe Abläufe von der Recheneinheit verwirklicht werden können. Der Festwertspeicher erweist sich dahingehend als vorteilhaft, als daß durch unberechtigten Zugriff die Daten nicht veränderbar sind. Darüber hinaus kann Installationsaufwand eingespart werden, da der Festspeicher bereits zur Inbetriebnahme fest eingespeicherte Daten für die Programmeinheit aufweist. Eine hohe Sicherheit der Funktion der Einrichtung kann gewährleistet werden.

In einer weiteren Ausgestaltung wird vorgeschlagen, daß die Einrichtung eine Energieversorgung über die Schnittstelle zur Datenverarbeitungs- und/oder Speichereinrichtung aufweist. So kann eine separate Energieversorgung für die Einrichtung eingespart werden. Kosten und Bauvolumen der Einrichtung können weiter reduziert werden.

Darüber hinaus wird vorgeschlagen, daß die Einrichtung einstückig mit der Datenverarbeitungs- und/oder Speichereinrichtung ausgebildet ist. So kann die Einrichtung beispielsweise als Steckkarte in einem PC ausgebildet sein, die über den PC-Bus mit dem PC in Kommunikationsverbindung steht. Es kann vorgesehen sein, daß die Energieversorgung ebenfalls durch den PC erfolgt. Vorteilhaft können ein separates Gehäuse und Verkabelungsaufwand weiter reduziert werden.

Um mehrere Kommunikationsverbindungen gleichzeitig zwischen der Datenverarbeitungs- und/oder Speichereinrichtung sowie dem Datennetzwerk zu ermöglichen, wird vorgeschlagen, daß die Schalteinheit mehrere Ports aufweist, die unabhängig voneinander steuerbar sind. Diese Funktion erweist sich insbesondere dann als vorteilhaft, wenn die Datenverarbeitungs- und/oder Speichereinrichtung durch mehrere solche Einrichtungen gebildet ist, die über ein lokales Netzwerk miteinander in Kommunikationsverbindung stehen und die mittels der erfindungsgemäßen Einrichtung eine Kommunikationsverbindung zum Datennetzwerk unabhängig voneinander herstellen können.

Es wird ferner vorgeschlagen, daß die Schnittstelle eine Einheit zur Potenzialtrennung aufweist. So kann eine hohe elektrische Sicherheit erreicht werden. Darüber hinaus kann erreicht werden, daß im Falle einer elektrischen Störung entweder im Datennetzwerk oder auch in der Datenverarbeitungsund/oder Speichereinrichtung diese Störung nicht über die Schnittstelle zu einer Störung der Einrichtung führen kann. Ferner kann erreicht werden, daß eine solche Störung nicht über die Einrichtung weitergetragen wird.

Darüber hinaus wird vorgeschlagen, daß die Schnittstelle Mittel zum Schutz vor Verpolung und/oder ESD aufweist. Insbesondere bei einer manuellen Verkabelung durch Nichtfachleute besteht immer die Gefahr, daß Schnittstellen sowie zugehörige Elektronik durch unsachgemäße Behandlung beschädigt werden kann. Durch die vorgesehenen Mittel kann daher die Betriebssicherheit erheblich erhöht werden. Hinsichtlich der Anforderungen an solche Mittel wird auf die ständige Normung verwiesen, in der die Anforderungen und Ausgestaltungen an derartige Schutzmittel umfangreich festgelegt sind.

In einer weiteren Ausgestaltung wird vorgeschlagen, daß die Einrichtung eine Anzeigeeinheit aufweist. Die Anzeigeeinheit kann beispielsweise durch eine Siebensegmentanzeige oder auch durch Leuchtdioden, Glimmlampen, Glühlampen, eine Kombination hiervon oder dergleichen gebildet sein. Die Anzeigeeinheit kann auch akustische Mittel wie Lautsprecher, Summer, Piepser und dergleichen umfassen. Mit der Anzeigeeinheit können unterschiedliche Zustände der Einrichtung angezeigt werden, wie beispielsweise die Art der Energieversorgung, eine aktive oder abgeschaltete Kommunikationsverbindung, die Anzahl der eingeschalteten oder ausgeschalteten Ports und dergleichen.

Ferner wird der Erfindung ein Verfahren zum Betrieb der erfindungsgemäßen Vorrichtung vorgeschlagen, wobei in einem Grundzustand die Kommunikationsverbindung mittels der Schalteinheit unterbrochen wird, auf Anforderung der Datenverarbeitungs- und/oder Speichereinrichtung über die mit dieser verbundene Schnittstelle eine Kommunikationsverbindung zur Modemeinheit hergestellt und mittels der Modemeinheit die Kommunikationsverbindung zwischen der Datenverarbeitungs- und/oder Speichereinrichtung und dem Datennetzwerk hergestellt wird. Ein hohes Maß an Datensicherheit kann erreicht werden, insbesondere wenn die Schalteinheit in der Regel automatisch ihren Grundzustand einnimmt. Dies kann beispielsweise durch Aktivieren der Energieversorgung oder auch durch entsprechende Schaltmittel wie einer Rücksetztaste oder dergleichen erreicht werden. Erst auf Anforderung der Datenverarbeitungs- und/oder Speichereinrichtung wird die Kommunikationsverbindung zum Datennetzwerk hergestellt. So kann erreicht werden, daß unberechtigten Dritten ein Zugriff auf die Datenverarbeitungsund/oder Speichereinrichtung über das Datennetzwerk erschwert wird.

In einer vorteilhaften Weiterbildung wird vorgeschlagen, daß ein Port der Schalteinheit zur Herstellung einer Kommunikationsverbindung auf Anforderung von einer vorgebbaren Datenquelle aktiviert wird. So kann beispielsweise vorgesehen sein, daß externe, mit dem Datennetzwerk verbundene Kommunikationsendstellen eine Berechtigung erhalten, die es ihnen erlaubt ohne Anforderung der Daten- und/oder Speichereinrichtung eine Kommunikationsverbindung zur Datenverarbeitungs- und/oder Speichereinrichtung aufzubauen. Die berechtigten Kommunikationsendstellen können beispielsweise in einer Speichereinheit der Einrichtung gespeichert sein. So kann beispielsweise die Recheneinheit eine über das Datennetzwerk eingehende Anforderung zur Herstellung einer Kommunikationsverbindung auswerten und überprüfen, ob diese von einer berechtigten Kommunikationsendstelle erfolgt und in Abhängigkeit von dieser Prüfung bei Berechtigung entweder die Kommunikationsverbindung über die Schalteinheit freigeben oder die Anfrage zurückweisen.

Vorteilhaft wird weiterhin vorgeschlagen, daß die Kommunikationsverbindung bei Nichtbenutzung mittels der Schalteinheit unterbrochen wird. So kann beispielsweise durch die Recheneinheit eine ständige Überwachung der Kommunikationsverbindung durchgeführt werden und bei Nichtbenutzung eine Unterbrechung der Schalteinheit erreicht werden. Die Datensicherheit kann weiter erhöht werden.

Darüber hinaus wird vorgeschlagen, daß die Kommunikationsverbindung mittels der Schalteinheit nach Ablauf einer vorgebbaren Zeit unterbrochen wird. Die Datensicherheit kann weiter erhöht werden. Die vorgebbare Zeit kann beispielsweise mittels einer entsprechenden an der Einrichtung vorgesehenen Eingabeeinheit eingegeben werden oder sie kann auch durch die Datenverarbeitungs- und/oder Speichereinrichtung übermittelt werden. Es kann vorgesehen sein, daß ein maximales Zeitlimit fest eingegeben ist, um zu verhindern, daß durch einen Versuch, die Einrichtung zu manipulieren, Daten verändert werden und die Funktion der Einrichtung nicht mehr gewährleistet wird.

In einer vorteilhaften Weiterbildung wird vorgeschlagen, daß die vorgebbare Zeit mittels der Recheneinheit in Abhängigkeit einer Nutzung der Kommunikationsverbindung ermittelt wird. So kann die Zeit beispielsweise an eine prognostizierte Übertragungsdauer von Daten angepaßt werden, so daß sichergestellt ist, daß nach Beendigung der Datenübertragung die Kommunikationsverbindung unterbrochen wird. Diese Ausgestaltung ermöglicht darüber hinaus das Erkennen von Fehlern, die dazu führen, daß die Datenübertragung deutlich länger dauert, als ursprünglich prognostiziert. So können unsichere oder manipulierte Datenquellen, deren Daten über das Datennetzwerk abgefragt werden, erkannt werden. Darüber hinaus können derartige Datenquellen als unsicher gekennzeichnet und deren Adresse (Internet-Adresse) in einer Tabelle gespeichert werden.

In einer weiteren Ausgestaltung wird vorgeschlagen, daß auf Anforderung der Grundzustand eingenommen wird. Die Anforderung kann z. B. durch eine separate Taste der Einrichtung oder auch durch die Datenverarbeitungs- und/oder Speichereinrichtung erfolgen. Sie kann aber auch durch Deaktivierung und Aktivierung der Energieversorgung erreicht werden. Erkennt beispielsweise ein Benutzer der Datenverarbeitungs- und/oder Speichereinrichtung einen unberechtigten Zugriff, so kann er durch Eingabe eines entsprechenden Befehls eine Aufforderung, den Grundzustand einzunehmen, an die Einrichtung übermitteln. Die Sicherheit kann weiter erhöht werden.

Es wird ferner vorgeschlagen, daß die eingehenden und ausgehenden Daten überwacht werden. So kann beispielsweise vorgesehen sein, daß die Einrichtung mittels der Recheneinheit die eingehenden und ausgehenden Daten überwacht und bei aktiver Prüfung und negativen Prüfergebnis den entsprechenden Port der Schalteinheit abschaltet. Die Datensicherheit kann weiter erhöht werden.

In einer weiteren Ausgestaltung wird vorgeschlagen, daß bei einer unberechtigten Anforderung über das Datennetzwerk der angesprochene Port deaktiviert wird. So kann sichergestellt werden, daß unberechtigte Dritte keinen Zugriff auf die Datenverarbeitungs- und/oder Speichereinrichtung erhalten können, da eine Kommunikationsverbindung zu dieser nicht aufgebaut werden kann. Es kann vorgesehen sein, daß der angesprochene Port bis zu einer erneuten externen Freischaltung gesperrt bleibt.

Darüber hinaus wird vorgeschlagen, daß eine unberechtigte Anforderung angezeigt wird. So kann beispielsweise die Anzeigeeinheit der Einrichtung dazu verwendet werden, eine unberechtigte Anforderung anzuzeigen. Dies kann beispielsweise durch eine separate Leuchtdiode oder Glimmlampe oder Glühlampe oder auch durch die Übermittlung einer entsprechenden Information an die Datenverarbeitungs- und/oder Speichereinrichtung erfolgen. Weiterhin wird vorgeschlagen, oder auch die Anzahl der aktiven und/oder abgeschalteten Ports angezeigt werden. Diese Ausgestaltung ermöglicht es dem Benutzer, den Zustand der Kommunikationsverbindungen mit zu verfolgen.

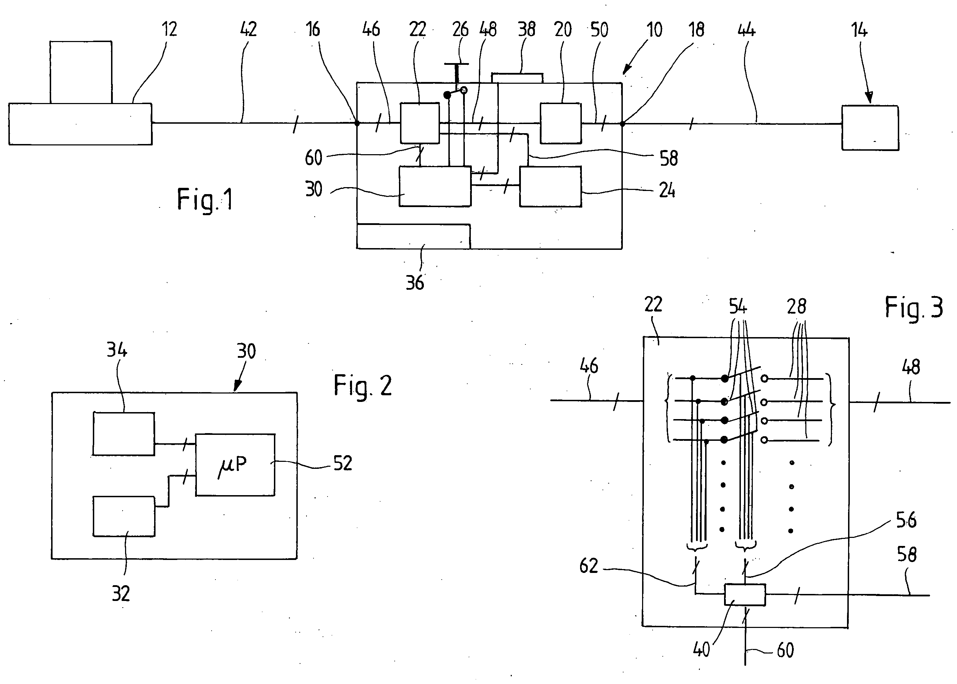

Weitere Vorteile und Merkmale sind der Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen. Die Zeichnungen sind Schemazeichnungen und dienen nur der Erläuterung der folgenden Ausführungsbeispiele.

Es zeigen:
- Fig. 1: eine schematische Darstellung eines Internetzuganges für einen PC mit einer erfindungsgemäßen Einrichtung,
- Fig. 2: eine schematische, vergrößerte Darstellung einer Recheneinheit der erfindungsgemäßen Einrichtung und
- Fig. 3: eine schematische, vergrößerte Darstellung einer Schalteinheit für eine erfindungsgemäße Einrichtung.

Fig. 1 zeigt einen PC 12 der über eine mehradrige Leitung 42 mit einer Schnittstelle 16 der Einrichtung 10 verbunden ist. Eine weitere Schnittstelle 18 der Einrichtung 10 ist mit einer ebenfalls mehradrigen Leitung 44 über eine nicht weiter bezeichnete Telefonverbindung und einen ISP mit dem Internet in Kommunikationsverbindung. Innerhalb der Einrichtung 10 ist eine Schalteinheit 22 über eine mehradrige Leitung 46 mit der Schnittstelle 16 verbunden. Vorliegend ist die Schnittstelle 16 mechanisch als RJ45 - Steckverbindung ausgestaltet. Ferner ist die Schalteinheit 22 über Leitungen 48 elektrisch leitend mit einer Modemeinheit 20 verbunden, die ihrerseits über Leitungen 50 mit einer Schnittstelle 18 der Einrichtung 10 zum Anschluß an eine Telefonleitung verbunden ist. Die Schnittstelle 18 ist ebenfalls als RJ45 - Steckverbindung ausgeführt. Die Einrichtung 10 weist ferner eine Recheneinheit 30 auf, welche mit der Schalteinheit 22 in Kommunikationsverbindung steht. Ferner ist auch eine Steuereinheit 24 vorgesehen, die sowohl mit der Recheneinheit 30 als auch mit der Schalteinheit 22 in Kommunikationsverbindung steht. In der vorliegenden Ausgestaltung weist die Einrichtung 10 eine Taste 26 auf, die elektrisch mit der Recheneinheit 30 verbunden ist. Ferner ist eine ebenfalls mit der Recheneinheit 30 verbundene Anzeigeeinheit 38 vorgesehen.

Fig. 2 zeigt einen Aufbau der Recheneinheit 30, die einen Mikroprozessor (µP) 52 in Kommunikationsverbindung mit einem Festwertspeicher 34 und einer Programmeinheit 32 zeigt. Im Festwertspeicher 34 sind für den Betriebsablauf der Einrichtung 10 wichtige Parameter in unveränderbarer Weise gespeichert, beispielsweise eine maximale Dauer für eine Kommunikationsverbindung, eine maximale Zeit für die Nichtbenutzung einer Kommunikationsverbindung und dergleichen. Die Programmeinheit 32 enthält Befehlscodes, die vom Mikroprozessor 52 entsprechend eines vorgebbaren Ablaufplans abgearbeitet werden.

Fig. 3 zeigt eine vergrößerte Darstellung der Schalteinheit 22, in der die einzelnen Ports 28 durch elektronische Schalter 54 ein- und/oder ausgeschaltet werden können. Die Schalter sind vorliegend als CMOS-Schalter ausgebildet, die über Steuerleitungen 56 von einer Logikeinheit 40 betätigt werden. Die Logikeinheit 40 steht über Leitungen 58, 60 mit der Recheneinheit 30 und der Steuereinheit 24 in Kommunikationsverbindung. Über mit den einzelnen Schaltern 54 verbundene Leitungen 62 und die Logikeinheit 40 können die Signale der einzelnen Ports von der Recheneinheit 30 abgefragt und ausgewertet werden. Die Logikeinheit 40 kann in MOS-Technologie oder auch als TTL-Technologie ausgebildet sein. Um jedoch einen Energieverbrauch gering zu halten, so daß die Energieversorgung durch die Batterie 36 möglichst über einen langen Zeitraum erfolgen kann, wird in dieser Ausgestaltung die MOS-Technologie bevorzugt.

Beim Anlegen der Versorgungsspannung für die Einrichtung 10 durch Einsetzen einer Batterie 36 nimmt die Einrichtung 10 einen Grundzustand ein, in dem alle elektronischen Schalter 54 der Ports 28 geöffnet sind. Die Verbindung zwischen dem Modem 20 und der Schnittstelle 16 ist somit unterbrochen, so daß zwischen dem PC 12 und dem Internet 14 keine Datenübertragung möglich ist. Der Benutzer des PC's 12, der einen Datenaustausch mit dem Internet 14 wünscht, betätigt die Taste 26, woraufhin die Schalteinheit 22 über einen Port 28 eine Kommunikationsverbindung zwischen der Schnittstelle 16 und der Modemeinheit 20 herstellt. Die Modemeinheit 20, die in dieser Ausgestaltung eine permanente Verbindung über eine Telefonleitung zum Internet aufrechterhält, stellt sodann die Kommunikationsverbindung zwischen dem PC 12 und dem Internet 14 her. Daten können ausgetauscht werden.

In einer alternativen Ausgestaltung kann vorgesehen sein, daß die Kommunikationsverbindung 44 zwischen der Modemeinheit 20 und dem Internet 14 nur bedarfsweise zur Verfügung steht. Auf Anforderung 12 wird eine voreingestellte Nummer gewählt und über eine Telefonverbindung zum Internet-Provider-Server eine Kommunikationsverbindung zum Internet 14 aufgebaut. Die Anzeige 38 zeigt einerseits an, daß die Energieversorgung aktiv ist und sie zeigt darüber hinaus an, wenn eine Kommunikationsverbindung zwischen dem PC 12 und dem Internet 14 vorliegt. Nach Beendigung der Datenübertragung kann der Benutzer durch Betätigen der Taste 26 die Schalteinheit 22 wieder in ihren Grundzustand zurückversetzen, d.h., daß die elektronischen Schalter 54 alle ihre geöffnete Stellung einnehmen.

Die Recheneinheit 30 überwacht die Datenübertragung auf den einzelnen Ports 28. Wird über einen vorgegebenen Zeitraum der Port 28 nicht zur Datenkommunikation benutzt, läuft eine im Festwertspeicher 34 vorgegebene Zeit ab und die Recheneinheit 30 veranlaßt nach Ablauf die Deaktivierung des Ports 28, indem über die Logikeinheit 40 ein entsprechender Steuerbefehl zur Öffnung des entsprechenden elektronischen Schalters 54 an die Schalteinheit 22 übermittelt wird. In der vorliegenden Ausgestaltung ist eine Aktivierung eines Ports 28 auf Anforderung von der Internetseite her nicht vorgesehen. Eine entsprechende Anforderung über das Internet läuft somit ins Leere, wodurch sichergestellt ist, daß kein Zugriff auf den PC 12 erfolgen kann.

Gleichwohl kann vorgesehen sein, daß für vorher festgelegte Kommunikationsendstellen ein Zugriff auf den PC 12 ermöglicht werden soll. Hierzu ist ausgangsseitig der Schalteinheit 22 an den Ports 28 jeweils eine Leitung zur Kommunikation mit der Recheneinheit 30 vorzusehen, so daß diese eingehende Anforderungen erkennen und mit beispielsweise im Festwertspeicher abgelegten Anforderungsberechtigungen vergleichen kann. Im Falle einer positiven Berechtigung wird der entsprechende Port durch die Recheneinheit 30 eingeschaltet, indem über die Logikeinheit 40 ein entsprechender Befehl an den zugehörigen elektronischen Schalter 54 übermittelt wird. Auch hier ist eine Überwachung der Nutzung der Kommunikationsverbindung vorgesehen, so daß bei Ablauf einer vorgebbaren Zeit der Nicht-Benutzung diese durch ein entsprechend an die Logikeinheit 40 übermitteltes Signal wieder abgeschaltet wird.

Erfolgt eine Anforderung über das Internet durch einen unberechtigten Dritten, so wird dies durch die Recheneinheit 30 festgestellt und ein entsprechendes Signal auf der Anzeigeeinheit 38 ausgegeben. In der vorliegenden Ausgestaltung ist die Anzeigeneinheit 38 durch eine LCD-Anzeige ausgebildet. Diese zeigt dann ein Warnsymbol an, z. B. ein Ausrufungszeichen oder ein Dreieck. Die Anzeigeeinheit 38 ist zur farbigen Anzeige vorgesehen. Das entsprechende Warnsymbol weist eine rote Farbe auf.

In der vorliegenden Ausgestaltung ist ferner vorgesehen, daß die Einrichtung 10 über die Leitung 42 vom PC 12 aus mit Energie versorgt wird. Die Batterie 36 ist vorliegend als Akkumulator ausgeführt, so daß einerseits hohe Energieanforderungen abgepuffert werden können, jedoch andererseits eine separate Energieversorgung eingespart werden kann.

Darüber hinaus ist die Schnittstelle 18 mit einer Potenzialtrennung versehen, um beispielsweise unerlaubte Spannungen, die zur Zerstörung der Einrichtung 10 führen könnten, von dieser fernzuhalten. Ferner weisen die Schnittstellen 16 und 18 Mittel zum Schutz vor Verpolung und ESD auf, so daß auch bei der Montage, beispielsweise mittels fehlerhafter Leitungen 42, 44, die Schnittstellen der Einrichtung 10 nicht beschädigt werden. Die entsprechenden Schutzmaßnahmen sind in bekannter Weise durch Diodenschaltungen realisiert.

Die in den Figuren dargestellten Ausführungsbeispiele dienen lediglich der Erläuterung der Erfindung und sind für diese nicht beschränkend. Darüber hinaus kann anstelle des PC's 12 auch ein lokales Netzwerk, Intranet, vorgesehen sein, über welches seinerseits mehrere PC's untereinander in Kommunikationsverbindung stehen. Jeder dieser PC's oder auch nur ein berechtigter Teil dieser PC's kann über die Einrichtung 10 eine Kommunikationsverbindung zum Internet 14 erstellen. Beispielsweise kann die Einrichtung auch mit einem Router einstückig ausgebildet sein. Darüber hinaus kann die Einrichtung auch zum Einbau in einem PC vorgesehen sein, wobei die Schnittstelle 16 zum Anschluß an einen PC-BUS ausgestaltet sein kann. Vorzugsweise ist die Einrichtung zum Einbau in diesem als PC-Steckkarte ausgebildet. Auch kann das Verfahren zum Betrieb der Vorrichtung durch Hinzufügung oder Abänderung von Schritten wunschgemäß angepaßt werden, ohne den Schutzbereich zu verlassen.

### Bezugszeichenliste

- 10: Einrichtung
- 12: PC
- 14: Internet
- 16: Schnittstelle
- 18: Schnittstelle
- 20: Modemeinheit
- 22: Schalteinheit
- 24: Steuereinheit
- 26: Taste
- 28: Port
- 30: Recheneinheit
- 32: Programmeinheit
- 34: Festwertspeicher
- 36: Batterie
- 38: Anzeigeeinheit
- 40: Logikeinheit
- 42: Leitung
- 44: Leitung
- 46: Leitung
- 48: Leitung
- 50: Leitung
- 52: µP
- 54: Elektronischer Schalter
- 56: Steuerleitung
- 58: Leitung
- 60: Leitung
- 62: Leitung

## Patentansprüche

1. Einrichtung (10) zur Herstellung einer Kommunikationsverbindung zwischen einer Datenverarbeitungs- und/oder Speichereinrichtung (12) und einem Datennetzwerk (14) mit Schnittstellen (16, 18) zum Anschluß an die Datenverarbeitungs- und/oder Speichereinrichtung (12) und an das Datennetzwerk (14) und mit einer Modemeinheit (20),
**gekennzeichnet durch**
eine schaltungstechnisch zwischen der Modemeinheit (20) und der Schnittstelle (16) zum Anschluß an die Datenverarbeitungs- und/oder Speichereinrichtung (12) vorgesehene Schalteinheit (22), mittels der die Kommunikationsverbindung zwischen der Datenverarbeitungs- und/oder Speichereinrichtung (12) und der Modemeinheit (20) schaltbar ist.

2. Einrichtung nach Anspruch 1, **gekennzeichnet durch** eine Steuereinheit (24, 26), mittels der die Schalteinheit (22) steuerbar ist.

3. Einrichtung nach Anspruch 1 oder 2, **dadurch gekennzeichnet, daß** die Schalteinheit (22) automatisch ab- und/oder einschaltbar ist.

4. Einrichtung nach einem der Ansprüche 1 bis 3, **dadurch gekennzeichnet, daß** die Schalteinheit (22) einen Port (28) aufweist.

5. Einrichtung nach einem der Ansprüche 1 bis 4, **gekennzeichnet durch** eine Recheneinheit (30).

6. Einrichtung nach einem der Ansprüche 1 bis 5, **dadurch gekennzeichnet, daß** die Recheneinheit (30) als Mikro-Chip-Prozessor ausgebildet ist.

7. Einrichtung nach einem der Ansprüche 1 bis 6, **dadurch gekennzeichnet, daß** die Recheneinheit (30) eine Programmeinheit (32) mit Festwertspeicher (34) aufweist.

8. Einrichtung nach einem der Ansprüche 1 bis 7, **gekennzeichnet durch** eine Energieversorgung (36) über die Schnittstelle zur Datenverarbeitungsund/oder Speichereinrichtung (12).

9. Einrichtung nach einem der Ansprüche 1 bis 8, **dadurch gekennzeichnet, daß** die Einrichtung (10) einstückig mit der Datenverarbeitungs- und/oder Speichereinrichtung (12) ausgebildet ist.

10. Einrichtung nach einem der Ansprüche 1 bis 9, **dadurch gekennzeichnet, daß** die Schalteinheit (22) mehrere Ports (28) aufweist, die unabhängig voneinander steuerbar sind.

11. Einrichtung nach einem der Ansprüche 1 bis 10, **dadurch gekennzeichnet, daß** die Schnittstelle (16, 18) eine Einheit zur Potenzialtrennung aufweist.

12. Einrichtung nach einem der Ansprüche 1 bis 11, **dadurch gekennzeichnet, daß** die Schnittstelle (16, 18) Mittel zum Schutz vor Verpolung und/oder ESD aufweist.

13. Einrichtung nach einem der Ansprüche 1 bis 12, **gekennzeichnet durch** eine Anzeigeeinheit (38).

14. Verfahren zum Betrieb einer Einrichtung nach einem der Ansprüche 1 bis 13, **dadurch gekennzeichnet, daß** in einem Grundzustand die Kommunikationsverbindung mittels der Schalteinheit (22) unterbrochen wird, auf Anforderung der Datenverarbeitungs- und/oder Speichereinrichtung (12) über die mit dieser verbundene Schnittstelle (16) eine Kommunikationsverbindung zur Modemeinheit (20) hergestellt und mittels der Modemeinheit (20) die Kommunikationsverbindung zwischen der Datenverarbeitungs- und/oder Speichereinrichtung und dem Datennetzwerk (14) hergestellt wird.

15. Verfahren nach Anspruch 14, **dadurch gekennzeichnet, daß** ein Port der Schalteinheit (22) zur Herstellung einer Kommunikationsverbindung auf Anforderung von einer vorgebbaren Kommunikationsendstelle aktiviert wird.

16. Verfahren nach Anspruch 14 oder 15, **dadurch gekennzeichnet, daß** die Kommunikationsverbindung bei Nichtbenutzung mittels der Schalteinheit (22) unterbrochen wird.

17. Verfahren nach einem der Ansprüche 14 bis 16, **dadurch gekennzeichnet, daß** die Kommunikationsverbindung mittels der Schalteinheit (22) nach Ablauf einer vorgebbaren Zeit unterbrochen wird.

18. Verfahren nach Anspruch 17, **dadurch gekennzeichnet, daß** die vorgebbare Zeit mittels der Recheneinheit (30) in Abhängigkeit einer Nutzung der Kommunikationsverbindung ermittelt wird.

19. Verfahren nach einem der Ansprüche 14 bis 18, **dadurch gekennzeichnet, daß** auf Anforderung der Grundzustand eingenommen wird.

20. Verfahren nach einem der Ansprüche 14 bis 19, **dadurch gekennzeichnet, daß** die eingehenden und ausgehenden Daten überwacht werden.

21. Verfahren nach einem der Ansprüche 14 bis 20, **dadurch gekennzeichnet, daß** bei einer unberechtigten Anforderung über das Datennetzwerk (14) der angesprochene Port (28) deaktiviert wird.

22. Verfahren nach einem der Ansprüche 14 bis 21, **dadurch gekennzeichnet, daß** eine unberechtigte Anforderung angezeigt wird.

23. Verfahren nach einem der Ansprüche 14 bis 22, **dadurch gekennzeichnet, daß** Zustandsgrößen der Einrichtung (10) angezeigt werden.

## Geänderte Patentansprüche

### Geänderte Patentansprüche gemäss Regel 86(2) EPÜ.

**1.** Einrichtung (10) zur Herstellung einer Kommunikationsverbindung zwischen einer Datenverarbeitungs- und/oder Speichereinrichtung (12) und einem Datennetzwerk (14) mit einer Schnittstelle (16) zum Anschluß an die Datenverarbeitungs- und/oder Speichereinrichtung (12), einer Schnittstelle (18) zum Anschluß an das Datennetzwerk (14) und mit einer Modemeinheit (20),
**gekennzeichnet durch**
eine schaltungstechnisch zwischen der Modemeinheit (20) und der Schnittstelle (16) zum Anschluß an die Datenverarbeitungs- und/oder Speichereinrichtung (12) vorgesehene Schalteinheit (22), mittels der die Kommunikationsverbindung zwischen der Datenverarbeitungs- und/oder Speichereinrichtung (12) und der Modemeinheit (20) schaltbar ist, wobei die Schalteinheit (22) mehrere Ports (28) aufweist, die unabhängig voneinander steuerbar sind.

**2.** Einrichtung nach Anspruch 1, **gekennzeichnet durch** eine Steuereinheit (24, 26), mittels der die Schalteinheit (22) steuerbar ist.

**3.** Einrichtung nach Anspruch 1 oder 2, **dadurch gekennzeichnet, daß** die Schalteinheit (22) automatisch ab- und/oder einschaltbar ist.

**4.** Einrichtung nach einem der Ansprüche 1 bis 3, **gekennzeichnet durch** eine Recheneinheit (30).

**5.** Einrichtung nach einem der Ansprüche 1 bis 4, **dadurch gekennzeichnet, daß** die Recheneinheit (30) als Mikro-Chip-Prozessor ausgebildet ist.

**6.** Einrichtung nach einem der Ansprüche 1 bis 5, **dadurch gekennzeichnet, daß** die Recheneinheit (30) eine Programmeinheit (32) mit Festwertspeicher (34) aufweist.

**7.** Einrichtung nach einem der Ansprüche 1 bis 6, **gekennzeichnet durch** eine Energieversorgung (36) über die Schnittstelle zur Datenverarbeitungs- und/oder Speichereinrichtung (12).

**8.** Einrichtung nach einem der Ansprüche 1 bis 7, **dadurch gekennzeichnet, daß** die Einrichtung (10) einstückig mit der Datenverarbeitungs- und/oder Speichereinrichtung (12) ausgebildet ist.

**9.** Einrichtung nach einem der Ansprüche 1 bis 8, **dadurch gekennzeichnet, daß** die Schnittstelle (16, 18) eine Einheit zur Potenzialtrennung aufweist.

**10.** Einrichtung nach einem der Ansprüche 1 bis 9, **dadurch gekennzeichnet, daß** die Schnittstelle (16, 18) Mittel zum Schutz vor Verpolung und/oder ESD aufweist.

**11.** Einrichtung nach einem der Ansprüche 1 bis 10, **gekennzeichnet durch** eine Anzeigeeinheit (38).

**12.** Verfahren zum Betrieb einer Einrichtung nach einem der Ansprüche 1 bis 11, **dadurch gekennzeichnet, daß** in einem Grundzustand die Kommunikationsverbindung mittels der Schalteinheit (22) unterbrochen wird, auf Anforderung der Datenverarbeitungs- und/oder Speichereinrichtung (12) über die mit dieser verbundene Schnittstelle (16) eine Kommunikationsverbindung zur Modemeinheit (20) hergestellt und mittels der Modemeinheit (20) die Kommunikationsverbindung zwischen der Datenverarbeitungs- und/oder Speichereinrichtung und dem Datennetzwerk (14) hergestellt wird.

**13.** Verfahren nach Anspruch 12, **dadurch gekennzeichnet, daß** ein Port der Schalteinheit (22) zur Herstellung einer Kommunikationsverbindung auf Anforderung von einer vorgebbaren Kommunikationsendstelle aktiviert wird.

**14.** Verfahren nach Anspruch 12 oder 13, **dadurch gekennzeichnet, daß** die Kommunikationsverbindung bei Nichtbenutzung mittels der Schalteinheit (22) unterbrochen wird.

**15.** Verfahren nach einem der Ansprüche 12 bis 14, **dadurch gekennzeichnet, daß** die Kommunikationsverbindung mittels der Schalteinheit (22) nach Ablauf einer vorgebbaren Zeit unterbrochen wird.

**16.** Verfahren nach Anspruch 15, **dadurch gekennzeichnet, daß** die vorgebbare Zeit mittels der Recheneinheit (30) in Abhängigkeit einer Nutzung der Kommunikationsverbindung ermittelt wird.

**17.** Verfahren nach einem der Ansprüche 12 bis 16, **dadurch gekennzeichnet, daß** auf Anforderung der Grundzustand eingenommen wird.

**18.** Verfahren nach einem der Ansprüche 12 bis 17, **dadurch gekennzeichnet, daß** die eingehenden und ausgehenden Daten überwacht werden.

**19.** Verfahren nach einem der Ansprüche 12 bis 18, **dadurch gekennzeichnet, daß** bei einer unberechtigten Anforderung über das Datennetzwerk (14) der angesprochene Port (28) deaktiviert wird.

**20.** Verfahren nach einem der Ansprüche 12 bis 19, **dadurch gekennzeichnet, daß** eine unberechtigte Anforderung angezeigt wird.

**21.** Verfahren nach einem der Ansprüche 12 bis 20, **dadurch gekennzeichnet, daß** Zustandsgrößen der Einrichtung (10) wie die Anzahl der aktiven und/oder abgeschalteten Ports und/oder unberechtigte Anforderungen angezeigt werden.
